Europäisches Patentamt

European Patent Office

Office européen des brevets

(19)

(11) **EP 0 776 533 B1**

(12) **EUROPÄISCHE PATENTSCHRIFT**

(45) Veröffentlichungstag und Bekanntmachung des Hinweises auf die Patenterteilung:
**30.09.1998 Patentblatt 1998/40**

(21) Anmeldenummer: **95927672.6**

(22) Anmeldetag: **20.07.1995**

(51) Int Cl.⁶: **H01S 3/081**

(86) Internationale Anmeldenummer:
**PCT/EP95/02858**

(87) Internationale Veröffentlichungsnummer:
**WO 96/06470 (29.02.1996 Gazette 1996/10)**

(54) **OPTISCH STABILER LASERRESONATOR**

OPTICALLY STABLE LASER RESONATOR

RESONATEUR LASER OPTIQUEMENT STABLE

(84) Benannte Vertragsstaaten:
**FR GB NL**

(30) Priorität: **19.08.1994 DE 4429452**

(43) Veröffentlichungstag der Anmeldung:
**04.06.1997 Patentblatt 1997/23**

(73) Patentinhaber: **SLCR Lasertechnik GmbH**
**52428 Jülich (DE)**

(72) Erfinder: **WERNER, Linus**
**D-41462 Neuss (DE)**

(74) Vertreter: **Gottlob, Peter, Dipl. Ing.**
**Forschungszentrum Karlsruhe GmbH**
**Stabsabteilung**
**Patente und Lizenzen**
**Weberstrasse 5**
**76133 Karlsruhe (DE)**

(56) Entgegenhaltungen:
**EP-A- 0 371 781      FR-A- 2 594 264**
**US-A- 3 731 224**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft einen optisch stabilen Laserresonator nach dem Oberbegriff des Patentanspruchs 1, wie er aus der DE 36 04 231 bekannt ist.

Laserresonatoren für Hochleistungslaser mit speziellen Strahleigenschaften werden beispielsweise für Anwendungen in der Oberflächentechnik benötigt. So ist es beim Entfernen von Farbschichten mit Laserstrahlung, wie sie in der "Industrial Laser Rewiev", August 1991, Seite 4 bis 9, beschrieben wird, günstig, wenn die Laserstrahlung, die auf der zu bearbeitenden Fläche auftrifft, örtlich möglichst homogen ist.

Im Prinzip ist es natürlich durch geeignete Integratoren möglich, auch inhomogene Laserstrahlung zu vergleichmäßigen. Allerdings müssen dabei einige Nachteile in Kauf genommen werden: so sind solche Integratoren i. a. nicht nur teuer und unhandlich, sondern können die Homogenität oft nur für einen bestimmten kleinen Abstandbereich von der Integrationsoptik garantieren (geringe Tiefenschärfe). Vorteilhafter ist es deshalb, wenn der Resonator so konzipiert ist, daß die mit seiner Hilfe erzeugte Laserstrahlung nicht nur weitgehend homogen ist, sondern auch ihre Homogenität bei einem Strahltransport beibehält. Gleichzeitig sollte die Laserstrahlung aber auch Strahleigenschaften haben, die in einfacher Weise Strahltransport und Strahlformung ermöglichen. Dazu ist es beispielsweise vorteilhaft, wenn die mit Hilfe des Resonators erzeugte Laserstrahlung durch einen konfokalen Parameter beschrieben werden kann, also möglichst frei von Astigmatismus oder Asymmetrie oder beidem ist. Wie ein stabiler Resonator für einen Hochleistungslaser vorteilhaft ausgestaltet werden kann, wird im Prinzip schon in der Patentschrift DE 3604231 dargelegt. Hier wird erwähnt, daß es für solche Resonatoren vorteilhaft ist, die Energie- bzw. Leistungsdichte auf der teildurchlässigen Auskoppeloptik zu verringern, damit diese Werte unterhalb einer für die Beschädigung kritischen Grenze liegen. Als Mittel hierzu werden optisch divergierende und konvergierende Elemente im Resonator empfohlen, die als interne Aufweitung im Resonator wirken und die Strahlfläche im Bereich der Auskoppeloptik vergrößern, um so die Strahlungsbelastung pro Fläche zu vermindern. Nach Möglichkeit sollten diese Elemente aus reflektierenden Flächen bestehen, weil diese höheren Strahlungsbelastungen widerstehen können und außerdem gut zu kühlen sind. Als nachteilig wird in der DE 36 04 231 erwähnt, daß immer dann, wenn für die divergierenden und konvergierenden Elemente einfach herzustellende, billige sphärische Spiegel verwendet werden, die Aufweitungsoptik im allgemeinen astigmatisch ist und dadurch ebenfalls einen Astigmatismus und/oder Asymmetrie im Laserstrahl erzeugt, die nach Meinung der Autoren durch zusätzliche optische Elemente wie zum Beispiel einen Zylinderspiegel kompensiert werden sollten.

Um die Probleme auf Grund des Astigmatimus näher zu beleuchten, soll noch einmal die Berechnung der Strahlparameter eines Resonators mit interner Aufweitung bei Verwendung von sphärischen Spiegeln eingegangen werden:

Vorstufe eines Resonators mit Aufweitung ist ein Resonator, der intern eine Linse enhält. Die Auslegung eines solchen Resonators ist aus der Literatur bekannt. So wird zum Beispiel in /1/ dargelegt, wie die Strahlparameter eines solchen Resonators mit einem internen fokussiernden Element berechnet werden können. Hier erlauben es die Ausdrücke (14a), (14b), zusammen mit den Ausdrücken (7) und (8) die für einen solchen Resonator charkteristische Grundmode zu berechnen.

Insbesondere ist es möglich, die konfokalen Parameter der auf beide Endspiegel auftretenden Laserstrahlung zu berechnen.

Wird statt der einen Linse ein aus zwei Linsen bestehenden Aufweitungssystem verwendet (Teleskop), so kann der Formalismus aus /1/ verwendet werden, wenn statt der Brennweite (bzw. Brechkraft) der einen Linse die gemeinsame Brennweite des durch die beiden Elemente gebildeten Systems eingesetzt wird. Weiterhin müssen die Abstände zu den Linsen in bekannter Weise durch die Abständen zu den Hauptebenen ersetzt werden. Ein Ausdruck für Brennweite und Lage der Hauptebenen für ein System aus zwei Linsen wird zum Beispiel in /2/ mit den Formeln (23), (24) und (25) angegeben.

Wenn danach der Abstand der beiden Linsen verändert wird, ändert sich auch die resultierende Brennweite und die Lage der Hauptebenen des Linsensystems. Damit können die Grundmoden des Resonators und damit auch die konfokalen Parameter der Strahlung vor dem Endspiegeln und dem Auskoppelspiegel verändert werden.

Werden statt der Linsen sphärische Spiegel verwendet, tritt Astigmatismus dann auf, wenn diese Spiegel unter einem von Null verschiedenen Einfallswinkel getroffen werden. Dann haben diese Spiegel für die tangentiale und die sagittale Richtung zwei verschiedene Brennweiten, die zum Beispiele für sphärische Spiegel in /3/, s. 585 angegeben werden. Die Beziehung lautet:

Brennweite tangentiale Richtung:

$$ft = f \cos(w)$$

Brennweite sagittale Richtung:

$$fs = \frac{f}{\cos(w)}$$

mit w: Einfallswinkel und f: Brennweite bei senkrechtem Einfall.

Der Astigmatismus der shpärischen Spiegel ist also dann besonders groß, wenn große Einfallswinkel gewählt werden.

Große Einfallswinkel erlauben es aber andererseits, das Teleskop kurz und damit platzsparend und kompakt aufzubauen.

Die Transformation von Laserstrahlung durch astigmatische Elemente ist einfach zu beschreiben, wenn für alle Elemente transversale Richtung und sagittale Richtung gleich sind oder senkrecht aufeinander stehen (orthogonal sind), weil dann die beiden Raumrichtungen entkoppelt sind. Bei einem stabilen Resonator mit astigmatischer Aufweitungsoptik kann dann die oben beschriebene Berechnung der Grundmode für die transversale und sagittale Richtung getrennt durchgeführt werden. Wegen der unterschiedlichen Gesamtbrennweiten für beide Richtungen sind dann die konfokalen Parameter der Grundmode des Resonators in tangentialer und sagittaler Richtung in allgemeinen sehr unterschiedlich, was zu einem astigmatischen und/oder asymmetrischen Strahl führt. Es kann auch vorkommen, daß der Resonator nur für eine Richtung stabil ist, während für die andere Richtung keine stabile Lösung existiert.

Aufgabe der vorliegenden Erfindung ist es, einen Resonator der gattungsgemäßen Art so auszugestalten, daß bei kompakter Bauform der Astigmatismus nahezu vollständig korrigiert ist. Gelöst wird diese Aufgabe durch die kennzeichnenden Merkmale des Patentanspruchs 1.

Die Unteransprüche beschreiben vorteilhafte Ausgestaltungen des Resonators.

Werden in einem Resonator die beiden sphärischen Spiegel in der im unten beschriebenen Weise angeordnet, ergeben sich aus den o. a. Ausführungen für die Brennweiten f1, f2 des von den beiden Spiegeln 4, 5 gebildeten Teleskops in tangentialer und in sagittaler Richtung folgende Ausdrücke:

$$1/ft = \frac{1}{f1 \cdot \cos(W1)} + \frac{1}{f2 \cdot \cos(W2)} - \frac{SA}{f1 \cdot f2 \cdot \cos(W1) \cdot \cos(W2)}$$

$$1/fs = \frac{\cos(W1)}{f1} + \frac{\cos(W2)}{f2} - \frac{SA \cdot \cos(W1) \cdot \cos(W2)}{f1 \cdot f2}$$

mit ft: Brennweite in tangentialer Richtung und fs: Brennweite in sagittaler Richtung.

Durch unterschiedliche Einfallswinkel W1 und W2 können demnach für die tangentiale und die sagittale Richtung verschiedene Brennweiten des Teleskops eingestellt werden, die unterschiedliche konfokale Parameter der Grundmode des Resonators für diese beiden Richtungen ergeben.

Wird der Einfallswinkel W2 bei gegebenem W1, f1, f2, und SA so gewählt, wie im Kennzeichen des Anspruchs 1 angegeben, ergeben sich für sagittale und tangentiale Richtung dieselbe Brennweite, wobei allerdings noch die Hauptebenen für die beiden Richtungen in ihrer Lage noch voneinander abweichen. Bei so gewähltem W2 sind die konfokalen Parameter für tangentiale und sagittale Richtung für die Grundmode auf dem Auskoppelfenster 1 (AS) nahezu gleich. Der schädliche Einfluß des Astigmatismus ist also kompensiert, selbst wenn große Einfallswinkel gewählt werden.

Die Toleranz, mit der W2 vom berechneten Wert abweichen kann, darf bei kleinen Winkeln W1 1° - 2° sein. Der Toleranzbereich wird aber mit zunehmenden Werten von W1 und abnehmendem Abstand SA geringer.

Laserstrahlung mit räumlich homogenem Strahlungsprofil, das die Form eines 'flat top' hat, kann mit einem stabilen Resonator erzeugt werden, wenn innerhalb des Resonators viele Moden (bevorzugt über 10) verstärkt werden. Die Anzahl N der Moden ist nach /3/ S. 696 dabei ungefähr durch:

$$N = (d/wo)^2$$

gegeben, wobei wo Durchmesser der Grundmode des Resonators und d der Durchmesser des Lasermediums ist. Bei dem erfindungsgemäßen Resonator kann der Durchmesser der Grundmode durch Änderung des Abstandes der beiden sphärischen Spiegel 4, 5 erfolgen. Der Durchmesser des Lasermediums ist hier ungefähr durch DT bzw. die dazu orthogonale Ausdehnung des aktiven Volumens gegeben. Wenn dann zusätzlich noch die Bedingungen des Kennzeichens von Anspruch 1 erfüllt sind, kann demnach ein Laserstrahl mit 'flat top ' Profil erzeugt werden, der nahezu frei von Astigmatismus ist.

Die Erfindung wird im folgenden an einem Beispiel mit Hilfe der Figuren näher erläutert.

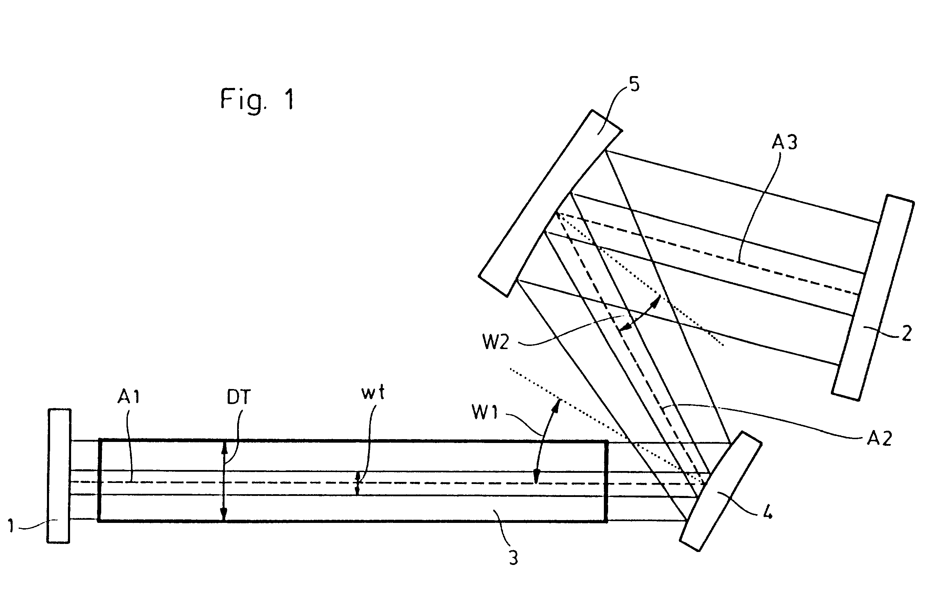

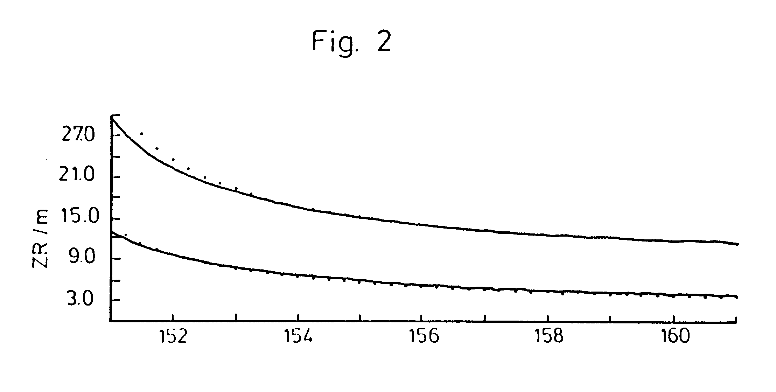

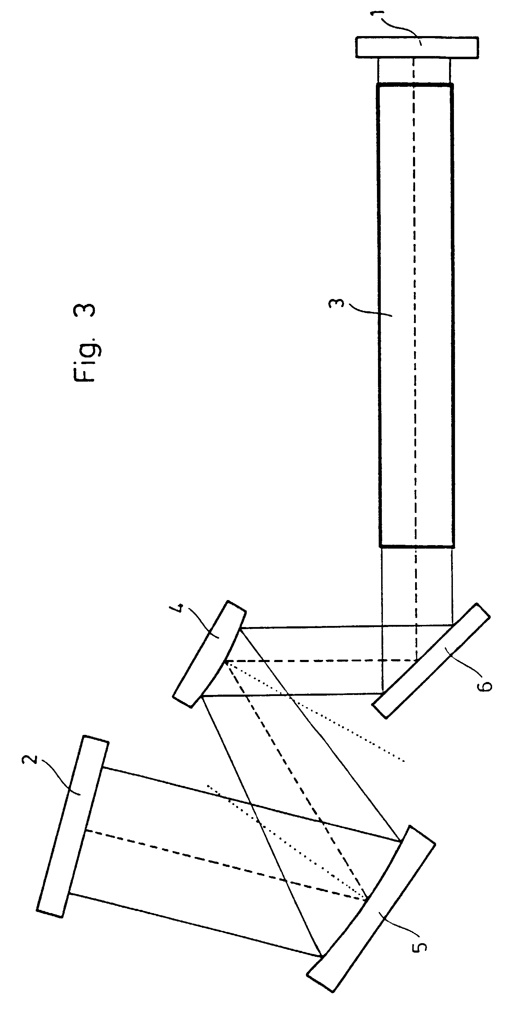

Dabei zeigt die Fig. 1 einen Resonator und die Fig. 2 ein Diagramm der verschiedenen konfokalen Parameter des Resonators. Die Fig. 3 zeigt eine Modifikation des Resonators gemäß Fig. 1.

Die Fig. 1 zeigt ein schematisches Ausführungsbeispiel, bei dem der Resonator für einen TEA-CO2-Laser ausgelegt ist. Dabei wird der Resonator durch einen Endspiegel 1 und einen teildurchlässigen Auskoppelspiegel 2 begrenzt. Das Lasermedium 3 befindet sich zwischen dem Endspiegel 1 und einem divergierenden Spiegel 4. Zwischen dem Spiegel 4 und dem Auskoppelspiegel 2 ist ein konvergierender Spiegel 5 angeordnet. Zwischen den Spiegelpaaren 1, 4; 4, 5 und 5, 2 sind die Grundmoden-Strahlachsen A1, A2 und A3 eingezeichnet. Der Abstand SA entspricht der Länge der Strahlachse A2. W1 ist der Winkel zwischen der Flächennormalen des Spiegels 4 und der Strahlachse A1 und W2 ist der Winkel zwischen der Flächennormalen des Spiegels 5 und der Strahlachse A2. DT bezeichnet den Durchmesser des Lasermediums. Die Strahltaillen in tangentialer und sagittaler Richtung sind mit wt, ws oder einfach wo bezeichnet.

Die Daten des Resonators sind:

| | |
|---|---|
| Endspiegel 1 (ES) | plan |
| Auskoppelspiegel 2 (AS) | plan |
| Radius Spiegel 4 | -0,3 m |
| Radius Spiegel 5 | 0,45 m |
| Abstand ES - Spiegel 4 | 2 m |
| Abstand AS - Spiegel 5 | 0,4 m |
| SA | zwischen 0.151 und 0.16 m |
| W1 | 16° |
| W2 | etwa 13° |

Fig. 2 zeigt die verschiedenen konfokalen Parameter der Grundmode des Resonators in Abhängigkeit von dem Abstand SA der beiden Spiegel 4, 5. Und zwar mit folgenden Bezeichnungen:

ZR-t,ES (gepunktete untere Linie): konfokaler Parameter in tangentialer Richtung zwischen Endspiegel (ES) und Konvexspiegel 4

ZR-s,ES (durchgezogene untere Linie): konfokaler Parameter in sagittaler Richtung zwischen Endspiegel (ES) und Konvexspiegel 4.

ZR-t,AS (gepunktete obere Linie): konfokaler Parameter in tangentialer Richtung zwischen Auskoppelspiegel (AS) und Konkavspiegel 5.

ZR-s,AS (durchgezogene obere Linie): konfokaler Parameter in sagittaler Richtung zwischen Auskoppelspiegel (AS) und Konkavspiegel 5.

Aus Fig. 2 ist zu erkennen, daß in dem angegebenen Bereich von SA sowohl ZR-t,AS und ZR-s,AS als auch ZR-t,ES und ZR-s,ES fast übereinstimmen, der Astigmatismus also nahezu vollständig korrigiert ist.

Entscheidend dafür, wieviele Moden im Resonator anschwingen, sind die konfokalen Parameter ZR-t,ES und ZR-s,ES, die über die Beziehung:

$$\pi * (w/2)^2 = 1 * ZR$$

den Durchmesser der Grundmode im Laser festlegen. Hierbei ist w der Durchmesser der Strahltaille, ZR der konfokale Parameter und 1 die Wellenlänge des Lasers.

Bei einer Wellenlänge von 10 µm ($CO_2$-Laser) und einem Lasermedium mit quadratischem Querschnitt, wobei DT 0.03 m ist, schwingen im Ausführungsbeispiel nach Fig. 1 ca. 17 Moden an. Dadurch kann mit diesem Resonator ein Laserstrahl mit 'flat top' Profil erreicht werden.

Die Fig. 3 zeigt einen Resonator, bei welchem ein zusätzlicher planarer Umlenkspiegel 6 zwischen dem Lasermedium 3 und dem Spiegel 5 eigefügt wurde. Dadurch kann das Teleskop günstiger positioniert, und die Austrittsrichtung des Laserstrahls unabhängig von der Lage des Lasermediums gewählt werden.

Literatur:

/1/ G. Herziger and H. Weber Appl. Opt. 23 (1984) 1450
/2/ H. Kogelnik Bell Syst. Tech. J. 44 (1965) 455

EP 0 776 533 B1

/3/ A. E. Siegman 'Lasers' ISBN 0-935702-11-5

Bezugszeichenliste:

1 Endspiegel (ES)
2 Auskoppelspiegel (AS)
3 Lasermedium (LM)
4 divergierender Spiegel
5 konvergierender Spiegel
6 Umlenkspiegel

**Patentansprüche**

1. Optisch stabiler Laserresonator, mit einem an einem Ende des Resonators angeordneten, das Licht voll reflektierenden Endspiegel (1) und mit einem am anderen Ende des Resonators angeordneten, als teilreflektierender Spiegel (2) ausgebildeten Auskoppelfenster, einem laseraktiven Medium (3), einem Paar von innerhalb des Resonators angeordneten sphärischen optischen Spiegeln (4, 5), wobei der eine Spiegel (4) divergierend und der andere Spiegel (5) konvergierend ist, zur Strahlaufweitung am Auskoppelfenster (2), wobei die Flächennormalen der Spiegel (4, 5) in Bezug auf die beiden Auftreffpunkte der Grundmoden-Strahlachse des Resonators in einer Ebene liegen, dadurch gekennzeichnet, daß der Einfallswinkel W1 am divergierenden Spiegel (4) bezüglich einer Grundmoden-Strahlachse A1 des Resonators größer als 10° und kleiner als 45° ist, wobei die Grundmoden-Strahlachse A1 zwischen dem vollreflektierenden Endspiegel (1) und dem divergierenden Spiegel (4) liegt und daß der Einfallswinkel W2 am Konvergierenden Spiegel (5) bezüglich einer Grundmoden-Strahlachse A2 des Resonators, wobei die Grundmoden-Strahlachse A2 zwischen dem divergierenden (4) und dem konvergierenden (5) Spiegel liegt, bei vorgegebenem Spiegelabstand SA und vorgegebenen Spiegelbrennweiten f1 des divergierenden Spiegels (4) und f2 des Konvergierenden Spiegel (5) durch folgende Formel festgelegt ist:

$$\frac{\cos(W1)}{f1} + \frac{\cos(W2)}{f2} - \frac{SA \cdot \cos(W1) \cdot \cos(W2)}{f1 \cdot f2}$$
$$= \frac{1}{f1 \cdot \cos(W1)} + \frac{1}{f2 \cdot \cos(W2)} - \frac{SA}{f1 \cdot f2 \cdot \cos(W1) \cdot \cos(W2)}$$

2. Optisch stabiler Resonator nach Anspruch 1, dadurch gekennzeichnet, daß das laseraktive Medium LM (3) sich in Raum zwischen dem Endspiegel (1) und dem sphärischen Spiegel (4) befindet, und der Abstand SA des spährischen divergierenden Spiegels (4) vom spährischen Konvergierenden Spiegel (5) so eingestellt ist, daß die Durchmesser wt und ws der Grundmode in tangentialer und sagittaler Richtung im laseraktiven Medium (Strahltaillen) erheblich kleiner sind als die Abmessung DT des aktiven Mediums LM (3) in den entsprechenden Raumrichtungen.

3. Optisch stabiler Resonator nach Anspruch 2, dadurch gekennzeichnet, daß die Abmessug DT mindestens 4 mal größer ist als die Strahlenradien ws, wt.

4. Optisch stabiler Resonator nach Anspruch 2, dadurch gekennzeichnet, daß die Abmessug DT mindestens 6.3 mal größer ist als die Strahlenradien ws, wt.

5. Optisch stabiler Resonator nach einem der Ansprüche 1 bis 4, dadurch gekennzeichnet, daß zwischen dem aktiven Medium (3) und dem divergierenden Spiegel (4) ein ebener Umlenkspiegel (6) angeordnet ist.

**Claims**

1. Optically stable laser resonator, having an end mirror (1), which is disposed at one end of the resonator and fully reflects the light, and having a decoupling window, which is disposed at the other end of the resonator and is configured as a partially reflecting mirror (2), having a laser-active medium (3), and a pair of spherical optical mirrors (4, 5), which are disposed internally of the resonator, one mirror (4) being divergent and the other mirror (5) being convergent, for the beam expansion at the decoupling window (2), the surface normals of the mirrors (4,5) relative to the two points of incidence of the base mode beam axis of the resonator lying in a plane, characterised in that the angle of incidence W1 at the diverging mirror (4) relative to a base mode beam axis A1 of the

5

resonator is greater than 10° and smaller than 45°, the base mode beam axis A1 lying between the fully reflecting end mirror (1) and the diverging mirror (4), and in that the angle of incidence W2 at the converging mirror (5) relative to a base mode beam axis A2 of the resonator - the base mode beam axis A2 lying between the diverging mirror (4) and the converging mirror (5) - is determined by the following formula, with a prescribed spacing SA between the mirrors and prescribed focal lengths f1 of the diverging mirror (4) and f2 of the converging mirror (5):

$$\frac{\cos(W1)}{f1} + \frac{\cos(W2)}{f2} - \frac{SA \cdot \cos(W1) \cdot \cos(W2)}{f1 \cdot f2}$$
$$= \frac{1}{f1 \cdot \cos(W1)} + \frac{1}{f2 \cdot \cos(W2)} - \frac{SA}{f1 \cdot f2 \cdot \cos(W1) \cdot \cos(W2)}.$$

2. Optically stable resonator according to claim 1, characterised in that the laser-active medium LM (3) is in space between the end mirror (1) and the spherical mirror (4), and the spacing SA between the spherical diverging mirror (4) and the spherical converging mirror (5) is so set that the diameters wt and ws of the base mode in the tangential and sagittal directions in the laser-active medium (reduced beam portions) are considerably smaller than the dimension DT of the active medium LM (3) in the corresponding directions in space.

3. Optically stable resonator according to claim 2, characterised in that the dimension DT is at least 4 times greater t:han the beam radii ws, wt.

4. Optically stable resonator according to claim 2, characterised in that the dimension DT is at least 6.3 times greater than the beam radii ws, wt.

5. Optically stable resonator according to one of claims 1 to 4, characterised in that a flat tilted mirror (6) is disposed between the active medium (3) and the diverging mirror (4).


**Revendications**

1. Résonateur laser optiquement stable comprenant à une extrémité du résonateur, un miroir d'extrémité (1) réfléchissant totalement la lumière et à l'autre extrémité du résonateur, un miroir à réflexion partielle (2) constituant une fenêtre de découplage, un milieu à activité laser (3), une paire de miroirs optiques sphériques (4, 5) placés à l'intérieur du résonateur, l'un des miroirs (4) étant divergent et l'autre miroir (5) convergent, pour étaler le faisceau sur la fenêtre de découplage (2), les normales à la surface des miroirs (4, 5) étant situées dans un plan par rapport aux deux points d'intersection des axes des faisceaux des modes de base du résonateur,
caractérisé en ce que

- l'angle d'incidence W1 sur le miroir divergent (4) avec l'axe du faisceau A1 du mode de base du résonateur est supérieur à 10° et inférieur à 45°, l'axe du faisceau A1 du mode de base étant situé entre le miroir à réflexion totale (1) et le miroir divergent (4), et,
- l'angle d'incidence W2 de la normale au miroir convergent (5) avec l'axe du faisceau A2 du mode de base du résonateur, cet axe A2 étant situé entre le miroir divergent (4) et le miroir convergent (5), et pour une distance donnée SA entre les miroirs et une distance focale f1 pour le miroir divergent (4) et une distance focale f2 pour le miroir convergent (5), on a la relation suivante

$$\frac{\cos(W1)}{f1} + \frac{\cos(W2)}{f2} - \frac{SA \cdot \cos(W1) \cdot \cos(W2)}{f1 \cdot f2}$$
$$= \frac{1}{f1 \cdot \cos(W1)} + \frac{1}{f2 \cdot \cos(W2)} - \frac{SA}{f1 \cdot f2 \cdot \cos(W1) \cdot \cos(W2)}$$

2. Résonateur optiquement stable selon la revendication 1,
caractérisé en ce que
le milieu à activité laser LM (3) se trouve dans l'espace compris entre le miroir d'extrémité (1) et le miroir sphérique (4), et la distance SA entre le miroir sphérique divergent (4) et le miroir sphérique convergent (5) est réglée pour que les diamètres (wt) et (ws) du mode de base dans la direction tangentielle et dans la direction sagittale dans le milieu actif laser (tailles du faisceau) soient beaucoup plus petits que la dimension DT du milieu actif laser LM (3) dans les directions correspondantes de l'espace.

3. Résonateur optiquement stable selon la revendication 2,
caractérisé en ce que
la dimension DT est au moins 4 fois plus grande que les rayons (ws), (wt) du faisceau.

4. Résonateur optiquement stable selon la revendication 2,
caractérisé en ce que
la dimension DT est au moins 6,3 fois plus grande que les rayons (ws), (wt) du faisceau.

5. Résonateur optiquement stable selon l'une des revendications 1 à 4,
caractérisé par
un miroir de renvoi (6) plan est placé entre le milieu actif (3) et le miroir divergent (4).

Fig. 1

Fig. 2

Fig. 3